Europäisches Patentamt

European Patent Office

Office européen des brevets

(11) Numéro de publication: **0 006 371**
A1

(12) **DEMANDE DE BREVET EUROPEEN**

(21) Numéro de dépôt: 79400325.1

(22) Date de dépôt: 23.05.79

(51) Int. Cl.³: **F 24 H 1/18,** F 24 D 17/00

(30) Priorité: 12.06.78 FR 7817463

(43) Date de publication de la demande: 09.01.80
Bulletin 80/1

(84) Etats contractants désignés: BE DE IT

(71) Demandeur: SAUNIER DUVAL - Société Anonyme,
250, route de l'Empereur, F-92508 Rueil
Malmaison (FR)

(72) Inventeur: Fillios, Jean-Pierre, 49, rue Pereire, F-78100
Saint Germain en Laye (FR)

(74) Mandataire: Lhuillier, René, 6, rue Lavoisier, F-93107
Montreuil Cédex (FR)

(54) **Chauffe-eau à accumulation mixte à énergie solaire et énergie d'appoint électrique ou autre.**

(57) L'invention concerne un mode de prélèvement d'eau chaude à partir d'un ballon d'accumulation.

On dispose à l'entrée du circuit de puisage un mitigeur thermostatique (13) réglé pour fournir de l'eau à une température moyenne prédéterminée, et l'on fait aboutir à ce mitigeur deux conduits de prélèvement d'eau chaude du ballon, l'un de ces conduits (14) débouchant sensiblement au milieu du ballon, dans une zone où la température de l'eau est généralement voisine ou légèrement inférieure à ladite température prédéterminée, l'autre conduit (15) débouchant à la partie supérieure du ballon dans une zone où la température de l'eau est nettement supérieure à ladite température prédéterminée, le prélèvement s'effectuant en priorité par le conduit (14).

Application aux chauffe-eau à accumulation mixte à énergie solaire et énergie d'appoint électrique ou autre.

0006371

## Chauffe-eau à accumulation mixte à énergie solaire et énergie d'appoint électrique ou autre.

L'invention se situe dans le domaine de la production d'eau chaude à partir d'un ballon d'accumulation mixte dont le chauffage est assuré par l'énergie solaire et une énergie d'appoint électrique ou autre, et porte plus précisément sur un agencement de prélèvement et de distribution de l'eau de ce ballon.

On sait que l'énergie solaire qui est temporaire ne suffit pas à assurer à elle seule le chauffage de l'eau d'un ballon et doit être complétée par un chauffage d'appoint tel qu'un système de chauffage électrique complémentaire. Un système simple consiste à disposer dans le ballon un premier échangeur alimenté en fluide chaud par un circuit comportant le panneau solaire, ainsi qu'un second échangeur alimenté en fluide chaud par un autre circuit servant d'appoint, ce second échangeur étant plus simplement encore constitué de résistances électriques plongées dans l'eau du ballon.

On sait également que les besoins en eau chaude sont souvent relativement modestes, et l'usager se contente habituellement d'eau à des températures de 40°C à 50°C. Or dans un ballon, si l'eau à la partie inférieure est à plus basse température, par contre à la partie supérieure elle peut atteindre des températures plus élevées, de l'ordre de 80°C. Si on prélève l'eau à la partie supérieure, il est par conséquent nécessaire que l'usager la mélange à de l'eau froide au niveau du puisage. De plus cette réserve d'eau chaude risque de se trouver rapidement épuisée, ce qui entraine la remise en fonctionnement systématique du chauffage d'appoint.

0006371

L'invention apporte une solution qui évite ces inconvénients en ce qu'elle propose un mode de prélèvement de l'eau du ballon, qui donne un confort accru à l'usager et limite au maximum l'enclenchement du chauffage d'appoint avec les économies qui en découlent.

Selon l'invention on dispose à l'entrée du circuit de puisage un mitigeur thermostatique, réglé pour fournir de l'eau à une température moyenne prédéterminée, et l'on fait aboutir à ce système deux conduits de prélèvement d'eau chaude du ballon, l'un de ces conduits débouchant sensiblement au milieu du ballon dans une zone où la température de l'eau est généralement voisine ou légèrement inférieure à ladite température prédéterminée, l'autre de ces conduits débouchant à la partie supérieure du ballon dans une zone où la température de l'eau est nettement supérieure à ladite température prédéterminée. Suivant une autre caractéristique de l'invention on fait en sorte que le prélèvement d'eau chaude se fasse préférentiellement par le premier de ces conduits, le second ne fournissant l'appoint calorifique au mitigeur que si ce dernier n'est alimenté qu'en eau à une température inférieure à la température prédéterminée.

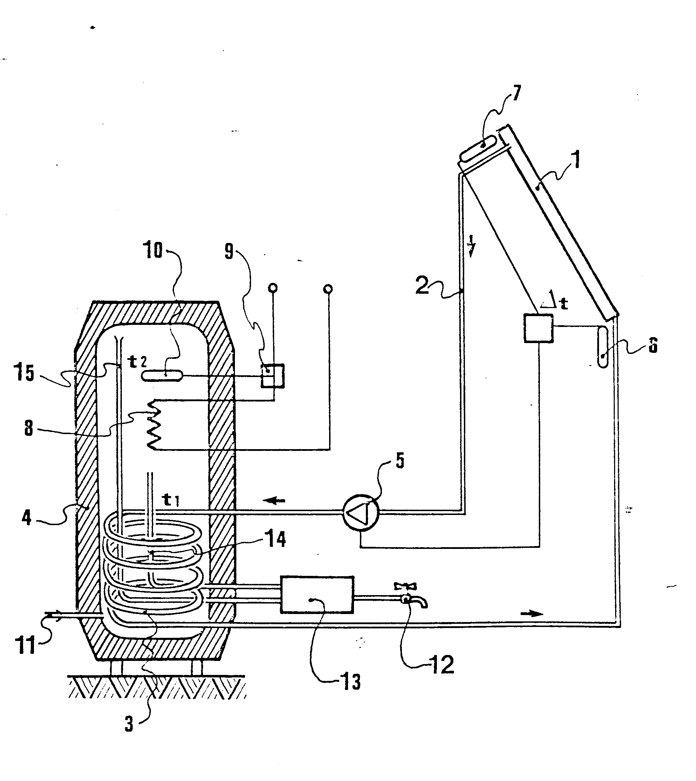

D'autres caractéristiques particulières et avantages de l'invention ressortiront de la description qui va suivre d'un exemple de réalisation en référence au dessin annexé qui représente une vue schématique du chauffe-eau alimenté par panneau solaire.

Le collecteur d'énergie solaire ou panneau solaire 1 est monté en série sur un circuit 2 alimentant en eau chaude un échangeur constitué d'un serpentin 3 plongé dans l'eau, à la partie inférieure du ballon d'accumulation 4. Une pompe 5 assure la circulation de l'eau dans le circuit 2 en fonction d'une différence de température $\Delta t$ prédéterminée détectée entre les deux aquastats 6 et 7 respectivement disposés à l'entrée et à la sortie du panneau solaire 1.

Un dispositif de chauffage d'appoint réalisé sous forme d'une résistance électrique 8 disposée dans un ballon, mais à la partie supérieure de celui-ci, est mise sous tension par un interrupteur

0006371

automatique de commande 9 en fonction d'une température prédéterminée $t_2$ (par exemple de l'ordre de 70°C) détectée par une sonde
d'aquastat 10 disposée également dans l'eau à la partie supérieure
du ballon. L'alimentation en eau froide s'effectue par un petit
conduit 11 arrivant à la base du ballon. Le puisage d'eau chaude
par le robinet 12 se fait par l'intermédiaire d'un mitigeur thermostatique 13 auquel aboutissent deux conduits de prélèvement 14
et 15. Le premier conduit 14 débouche sensiblement au milieu du
ballon, tandis que le second conduit 15 débouche à la partie supérieure du ballon. Le mitigeur thermostatique 13 est réglé pour
fournir une température $t_1$ d'eau chaude supportable pour l'usager
par exemple entre 37° et 50°, le prélèvement d'eau dans le ballon,
au moment d'un puisage, s'effectuant en priorité par le premier
conduit 14.

Dès la mise en fonctionnement de l'appareil, l'eau étant froide
dans le ballon, la différence de température $\Delta t$ prise entre les
aquastats 6 et 7, étant faible ou nulle, la pompe 5 fait circuler
l'eau dans le panneau solaire, les calories ainsi obtenues, transmises au ballon par l'échangeur 3 provoquent la montée en température de l'eau qu'il contient. Parallèlement la température $t_2$ à
l'aquastat 10 étant inférieure à la température prédéterminée
(par exemple 70°), le chauffage d'appoint fonctionne (on peut
évidemment prévoir une coupure de la pompe de circulation 5 pendant
les périodes nocturnes). Au bout de quelques temps l'eau chaude
à la partie supérieure du ballon, au niveau de la sonde 10 aura
atteint la température $t_2$ pour laquelle l'aquastat 10 agit sur
l'interrupteur 9 dans le sens d'une coupure du chauffage d'appoint.
L'eau au centre du ballon aura une température voisine de la température $t_1$ (température de réglage du mitigeur 13), inférieure
si l'appoint solaire est insuffisant mais supérieure si l'appoint
solaire est plus important. Dans ce dernier cas la partie supérieure
du ballon peut contenir de l'eau à une température nettement supérieure à $t_2$.

Au moment du puisage d'eau par l'usager, le mitigeur 13 fournira donc à l'alimentation 12, de l'eau chaude à la température $t_1$, en la prélevant en priorité au milieu du ballon par le premier conduit 14. Si la température de l'eau à cet endroit est égale ou supérieure à $t_1$, la totalité de l'eau puisée sera prélevée par ce conduit 14. Dès que l'arrivée d'eau froide en 11 à la base du ballon aura fait baisser la température au milieu de celui-ci au-dessous de $t_1$, le complément d'eau beaucoup plus chaude, sera automatiquement prélevé par le mitigeur dans la partie haute du ballon par l'intermédiaire du second conduit 15, de telle sorte que cet appoint de calories réajuste l'eau puisée à la valeur $t_1$. Si par contre la température de l'eau au niveau de l'embouchure du premier conduit 14 est inférieure à $t_1$, dès le puisage, l'eau chaude sera prélevée simultanément dans les deux conduits 14 et 15, le débit par le conduit 15 étant réglé automatiquement par le mitigeur thermostatique pour assurer l'appoint de calories comme indiqué plus haut.

Ce mode de prélèvement présente l'avantage d'utiliser en priorité l'eau chaude obtenue par le circuit de chauffage solaire, et de ne prélever de l'eau plus chaude -c'est-à-dire de ne faire fonctionner le chauffage d'appoint-, qu'en cas de nécessité dûe à l'insuffisance de l'appoint ou à l'abondance du puisage d'eau chaude. L'agencement de ce mode de prélèvement est en outre particulièrement simple à réaliser puisqu'il peut utiliser un dispositif classique de chauffage solaire et de chauffage d'appoint électrique adapté à un ballon d'accumulation, et se limite à ajouter un mitigeur thermostatique et deux conduits de prélèvement dans le ballon, le système est donc adaptable à toute installation existante.

L'invention n'est pas limitée à la forme de réalisation précédemment décrite, mais en englobe au contraire toutes les variantes constructives.

Office européen des brevets

**RAPPORT DE RECHERCHE EUROPEENNE**

Numero de la demande

EP 79 400 325.1

## DOCUMENTS CONSIDERES COMME PERTINENTS

| Catégorie | Citation du document avec indication, en cas de besoin, des parties pertinentes | Revendication concernee |
|---|---|---|
| P,X | DE - U - 7 835 177 (PECHINEY UGINE KUHLMANN) <br> * document complet * <br> -- | 1-3 |
| P,X | DE - A - 2 821 793 (AICHNER) <br> * document complet * <br> -- | 1-3 |
| X | FR - A - 2 332 505 (COMPAGNIE POUR L'ETUDE) <br> * fig. 4 et page 9, lignes 5 à 23 * <br> -- | 1-3 |
| P,A | DE - U - 7 707 178 (KREIBAUM) <br> * fig. 2 et 3 * <br> ---- | 1,3 |

**CLASSEMENT DE LA DEMANDE** (Int. Cl.³)

F 24 H 1/18
F 24 D 17/00

**DOMAINES TECHNIQUES RECHERCHES** (Int. Cl.³)

F 24 D 17/00
F 24 H 1/00
F 24 J 3/00

**CATEGORIE DES DOCUMENTS CITES**

X: particulierement pertirent
A: arriere-plan technologique
O: divulgation non-ecrite
P: document intercalaire
T: theorie ou principe a la base de l'invention
E: demande faisant interference
D: document cite dans la demande
L: document cite pour d'autres raisons

&: membre de la meme famille, document correspondant

| X | Le present rapport de recherche a ete etabli pour toutes les revendications |
|---|---|

| Lieu de la recherche | Date d'achevement de la recherche | Examinateur |
|---|---|---|
| Berlin | 07-09-1979 | PIEPER |

OEB Form 1503.1 06.78